# EUROPÄISCHE PATENTSCHRIFT

(11) **EP 0 418 712 B1**
(45) Veröffentlichungstag und Bekanntmachung des Hinweises auf die Patenterteilung: **10.11.1993**
(21) Anmeldenummer: 90117541.4
(22) Anmeldetag: 12.09.1990
(51) Int. Cl.: H02K 29/12

(54) **Positionssensor**
Position sensor
Capteur de position

(30) Priorität: 16.09.1989 DE 3930958
(43) Veröffentlichungstag der Anmeldung: 27.03.1991
(73) Patentinhaber: Balzers-Pfeiffer GmbH, 35614 Asslar (DE)
(72) Erfinder: Armin, Conrad, D-6348 Herborn-Hörbach (DE)

(56) Entgegenhaltungen:
- DE-A- 3 341 733
- DE-B- 1 463 426
- DE-B- 2 702 190

## Beschreibung

Die Erfindung betrifft eine Einrichtung zur Erkennung der Winkelstellung des Rotors eines kollektorlosen Gleichstrommotors, im folgenden auch Positionssensor genannt (siehe DE-B- 2 702 190).

Bei einem kollektorlosen Gleichstrommotor muß die elektronische Kommutierungseinrichtung die Spulen immer dann einschalten, wenn sie gegenüber dem umlaufenden Feldmagneten eine für die Drehmomentbildung günstige Stellung haben.

Zur Positionserkennung des umlaufenden Rotors werden im allgemeinen Hallsonden verwendet. Unter dem Einfluß des Magnetfeldes des Rotors geben diese eine Spannung ab, die zur Steuerung der elektronischen Kommutierungseinrichtung verwendet wird. Entsprechend der Phasenzahl der Statorwicklung muß die Anzahl und die Anordnung der Hallsonden gewählt werden. Anstelle normaler Hallsonden werden auch Hall-ICs verwendet, welche eine integrierte Elektronik besitzen.

Diese seither weit verbreitete Technik ist mit einer Reihe von Nachteilen behaftet:

Halbleiter-Bauelemente, zu denen Hallsonden und Hall-ICs gehören, weisen einen negativen Temperatur-Koeffizienten auf. Hieraus resultiert eine Temperaturabhängigkeit deren Widerstände und somit auch der Ausgangssignale. Aus diesem Grunde können Probleme bei der Signalerkennung auftreten. Die Signalhöhe kann in gewissen Grenzen durch die Elektronik ausgeglichen werden. Dies bedingt wiederum einen höheren Aufwand.

Die Temperaturempfindlichkeit der Halbleiter-Bauelemente verursacht eine hohe Ausfallquote.

Der Einsatzbereich der Hallsonden und Hall-ICs wird weiterhin durch ihre Strahlungsempfindlichkeit begrenzt. In einer strahlungsintensiven Umgebung, wie z.B. bei Beschleunigeranlagen, häufen sich die Fehlstellen in den Halbleiter-Bauelementen, was zu Funktionsuntüchtigkeit führt.

Ein weiterer Nachteil ist die Anzahl der Verbindungsleitungen von den Hallsonden zur elektronischen Kommutierungseinrichtung. Pro Hallsonde sind sechs Leitungen erforderlich, was den Einsatz von mehreren Sonden zu einem unerwünschten Aufwand führt. Die Länge der Verbindungsleitungen ist begrenzt, da durch die Kabelkapazität Phasenfehler der Signale hervorgerufen werden und zusätzliche Störungseinkopplungen der Motorstromversorgung unvermeidlich sind. Der Nutzsignal-Störsignal-Abstand ist dann wegen des kleinen Nutzsignalpegels sehr gering.

Der Erfindung lag die Aufgabe zugrunde, eine Einrichtung und ein Verfahren zur Erkennung der Winkelstellung des Rotors eines kollektorlosen Gleichstrommotors zu entwickeln, durch welche die angeführten Nachteile vermieden werden.

Die Aufgabe wird durch die kennzeichnenden Teile der beiden Patentansprüche gelöst.

Die Erfindung stellt eine zuverlässige Einrichtung zur Erkennung der Winkelstellung des Rotors eines kollektorlosen Gleichstrommotores dar. Am Einsatzort des Motors sind keinerlei Halbleiter-Bauelemente zu dessen Funktion nötig. Dadurch werden Nachteile, welche z.B. durch die negativen Temperaturkoeffizienten, die Temperaturempfindlichkeit und die Strahlungsempfindlichkeit bedingt sind, vermieden. Die Verbindung vom Motor zur elektronischen Kommutierungseinrichtung wird wesentlich vereinfacht, da pro Positionssensor nur zwei anstelle von sechs Leitungen notwendig sind.

Ein Ausführungsbeispiel der Erfindung wird im folgenden anhand der Zeichnungen näher beschrieben.

Es zeigen:
- Fig. 1: Längsschnitt eines kollektorlosen Gleichstrommotors
- Fig. 2: Querschnitt A-A nach Fig. 1 eines kollektorlosen Gleichstrommotores
- Fig.3: Querschnitt B-B nach Fig. 1 eines kollektorlosen Gleichstrommotores

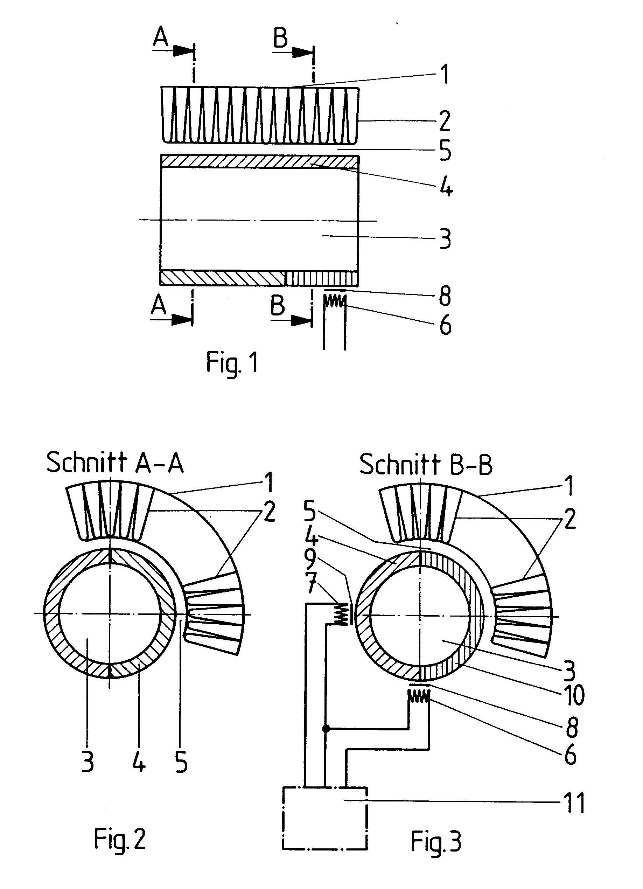

In Fig.1 ist im Längsschnitt und in Fig.2 im Querschnitt nach A-A von Fig. 1 der grundsätzliche Aufbau eines zweiphasigen kollektorlosen Gleichstrommotores dargestellt. Dieser besteht aus dem Stator 1 mit den Statorwicklungen 2 und aus dem Rotor 3 mit dem permanentmagnetischen Teil 4. Zwischen Rotor und Stator befindet sich der Luftspalt 5.

Der permanentmagnetische Teil 4 mit Nord- und Südpol erzeugt im Luftspalt 5 eine konstante magnetische Feldstärke, welche zusammen mit den stromdurchflossenen Statorwicklungen 2 ein Drehmoment bildet. Je nach Stellung der Magnetpole Nord und Süd relativ zu den Statorwicklungen 2, muß in diesen der Strom umgepolt werden.

Zur Positionserkennung der Rotorstellung werden anstelle der früher um 90° versetzt angeordneten Hallsonden erfindungsgemäß Spulen 6 und 7 mit jeweils einem Kern 8 und 9 aus Ferritmaterial eingebaut.

Ferritmaterial wird hier verwendet, da es eine schmale und rechteckige Hysteresekennlinie aufweist. Durch die schmale Form werden wegen der geringen Remanenz die Verluste klein gehalten und der steile Anstieg der Hysteresekennlinie, welcher sich in der rechteckigen Form ausdrückt, hat zur Folge, daß bei kleinen Feldstärkeänderungen sehr schnell der Sättigungsbereich erreicht ist. Anstelle von Ferritmaterial können auch andere Materialien verwendet werden, welche die gleichen oder ähnliche Eigenschaften aufweisen.

Da die Anordnung von Spulen 6 und 7 und der Kerne 8 und 9 aus Ferritmaterial nicht zwischen magnetischem Nord- und Südpol der Rotormagnete unterscheiden können und pro Umlauf nur ein Signal pro Spule erwünscht ist, wurde im axialen Bereich des Rotors 3, in dem sich die Spulen 6 und 7 befinden, nur die Hälfte des Rotors 3 mit permanentmagnetischem Material 4 bestückt (Fig.3).

Die Gegenseite wird in diesem Bereich zur Vermeidung von Unwucht mit unmagnetisechem Material 10 gleicher Dichte versehen.

Die Spulen 6 und 7 werden von einem Wechselstrom durchflossen. Die Frequenz dieses Wechselstromes ist groß gegenüber der Nenndrehfrequenz des Rotors. Sie beträgt in dem hier angegebenen Beispiel ca. 30 KHz. Die Induktivität der Spule ist durch die hohe Permeabilität der Kerne 8 und 9 aus Ferritmaterial sehr groß. Dadurch entsteht ein hoher Spannungsabfall während einer halben Umdrehung, bei der kein magnetischer Fluß die Spule durchsetzt. Dies ist jeweils dann der Fall, wenn die Spulen 6 und 7 den unmagnetischen Material gegenüberstehen.

Werden jedoch während einer halben Umdrehung diese Kerne 8 und 9 aus Ferritmaterial vom starken magnetischen Fluß des Rotormagneten 4 durchdrungen, stellt sich in dem Ferritmaterial eine Sättigung ein. Diese bedingt eine starke Verminderung der Induktivität der Spulen 6 und 7, wodurch wiederum der Spannungsabfall an den Spulen stark reduziert wird.

Diese Änderung der Wechselspannungs-Amplitude wird als Signal zur Steuerung der Kommutierungsanordnung 11 verwendet.

## Patentansprüche

1. Einrichtung zur Erkennung der Winkelstellung des Rotors (3) eines kollektorlosen Gleichstrommotors, dadurch gekennzeichnet, daß im Luftspalt (5) zwischen Stator (1) und Rotor (3) Spulen (6,7) mit jeweils einem Kern (8,9) aus magnetischem Material, welches eine möglichst schmale und rechteckige Hysteresekennlinie aufweist, vorhanden sind, daß die Spulen (6,7) von einem Wechselstrom durchflossen werden, dessen Frequenz groß gegenüber der Nennfrequenz des Rotors (3) ist, daß der Rotor (3) in dem axialen Bereich, in welchem sich die Spulen (6,7) befinden, nur auf halbem Umfang mit permanentmagnetischem Material (4) bestückt ist und daß die Gegenseite in diesem Bereich mit unmagnetischem Material (10) gleicher Dichte versehen ist.

2. Verfahren zur Erkennung der Winkelstellung des Rotors (3) eines kollektorlosen Gleichstrommotores mit Hilfe der Einrichtung nach Anspruch 1, dadurch gekennzeichnet, daß die Änderung des Spannungsabfalles an den Spulen (6,7), welche während einer Umdrehung des Rotors durch das abwechselnde Vorbeilaufen von permanentmagnetischem Material (4) und unmagnetischem Material (10) hervorgerufen wird, zur Erkennung der Winkelstellung des Rotors (3) und zur Steuerung der elektronischen Kommutierungseinrichtung (11) verwendet wird.

3. Verfahren nach Anspruch 2, dadurch gekennzeichnet, daß die Änderung des Spannungsabfalles an den Spulen (6,7) während einer Umdrehung des Rotors dadurch erzeugt wird, daß bei einer halben Umdrehung, während der unmagnetische Teil (10) des Rotors an den Spulen vorbeiläuft, in diesen der volle Spannungsabfall herrscht und während der nächsten halben Umdrehung die Spulenkerne sich durch das Vorbeilaufen des magnetischen Teils (4) des Rotors im Sättigungsbereich befinden, wodurch deren Induktivität stark vermindert wird und als Folge dessen sich der Spannungsabfall erheblich reduziert.

## Claims

1. An arrangement for detecting the angular position of the rotor (3) of a commutator-less direct-current motor, characterised in that coils (6,7) with respectively a core (8,9) made of magnetic material which has a hysteresis characteristic which is as narrow and rectangular as possible are present in the air gap (5) between the stator (1) and the rotor (3), in that the coils (6,7) have flowing through them an alternating current the frequency of which is large as compared with the nominal frequency of the rotor (3), in that the rotor (3) in the axial region in which the coils (6,7) are located is equipped only on half its circumference with permanent-magnetic material (4) and in that the opposite side in this region is provided with non-magnetic material (10) of the same density.

2. A method of detecting the angular position of the rotor (3) of a commutator-less direct-current motor with the aid of the arrangement according to claim 1, characterised in that the variation of the voltage drop at the coils (6,7) which is caused during one revolution of the rotor by the alternate running past of permanent-magnetic material (4) and non-magnetic material (10) is used for detecting the angular position of the rotor (3) and for controlling the electronic commutation device (11).

3. A method according to claim 2, characterised in that the variation of the voltage drop at the coils (6,7) during one revolution of the rotor is produced such that in one half revolution, while the non-magnetic part (10) of the rotor is running past the coils, the full voltage drop prevails in these, and during the next half revolution the coil cores are in the saturation region as a result of the running past of the magnetic part (4) of the rotor, whereby the inductance thereof is severely reduced and as a result thereof the voltage drop is reduced considerably.

## Revendications

1. Dispositif de détermination de la position angulaire du rotor (3) d'un moteur en courant continu sans collecteur, caractérisé en ce que des bobines (6, 7), pourvues chacune d'un noyau (8, 9) en matière magnétique qui présente une caractéristique d'hystérésis aussi petite et rectangulaire que possible, sont disposées dans l'intervalle d'air (5) entre le stator (1) et le rotor (3), en ce que les bobines (6, 7) sont traversées par un courant alternatif dont la fréquence est élevée par rapport à la fréquence nominale du rotor (3), en ce que le rotor (3) n'est pourvu de matière (4) d'aimant permanent, dans la zone axiale dans laquelle se trouvent les bobines (6, 7), que sur la moitié de sa périphérie et en ce que le côté opposé est pourvu, dans cette zone, de matière non magnétique (10) d'une même densité.

2. Procédé de détermination de la position angulaire du rotor (3) d'un moteur en courant continu sans collecteur à l'aide du dispositif selon la revendication 1, caractérisé en ce que la modification de la baisse de tension aux bobines (6, 7), qui est provoquée pendant une rotation du rotor par le passage en alternance de matière (4) d'aimant permanent et d'une matiére non magnétique (10), est utilisé pour déterminer la position angulaire du rotor (3) et pour commander le dispositif électronique (11) de commutation.

3. Procédé selon la revendication 2 caractérisé en ce que la variation de la baisse de tension aux bobines (6, 7) pendant une rotation du rotor est engendré par le fait que la baisse de tension est complète dans les bobines pendant une demi-rotation tandis que la partie non magnétique (10) du rotor passe le long de celles-ci, et que les noyaux de bobines se trouvent dans l'état de saturation pendant la demi-rotation suivante lors du passage le long de la partie magnétique (4) du rotor, grâce à quoi leur inductivité est fortement diminuée et la baisse de tension est par conséquent considérablement réduite.
